(19) Europäisches Patentamt / European Patent Office / Office européen des brevets

(11) **EP 3 213 815 B1**

(12) **EUROPEAN PATENT SPECIFICATION**

(45) Date of publication and mention of the grant of the patent:
**11.08.2021 Bulletin 2021/32**

(21) Application number: **15842229.5**

(22) Date of filing: **14.09.2015**

(51) Int Cl.:
*H01M 4/86* (2006.01)      *H01M 4/92* (2006.01)
*H01M 4/88* (2006.01)      *H01M 4/96* (2006.01)
*H01M 8/04* (2016.01)      *B01J 23/42* (2006.01)
*B01J 35/10* (2006.01)     *D01F 9/22* (2006.01)
*C01B 3/00* (2006.01)      *F17C 11/00* (2006.01)
*C01B 32/05* (2017.01)     *C01B 32/366* (2017.01)
*C01B 32/348* (2017.01)

(86) International application number:
**PCT/JP2015/075995**

(87) International publication number:
**WO 2016/043153 (24.03.2016 Gazette 2016/12)**

(54) **METAL COMPOSITE CARBON MATERIAL, FUEL CELL CATALYST, FUEL CELL, HYDROGEN-OCCLUDING MATERIAL, HYDROGEN TANK, AND PRODUCTION METHOD FOR METAL COMPOSITE CARBON MATERIAL**

METALLVERBUND-KOHLENSTOFFMATERIAL, BRENNSTOFFZELLENKATALYSATOR, BRENNSTOFFZELLE, WASSERSTOFFEINSCHLIESSENDES MATERIAL, WASSERSTOFFSPEICHER UND VERFAHREN ZUR HERSTELLUNG EINES METALLVERBUND-KOHLENSTOFFMATERIALS

MATÉRIAU EN CARBONE COMPOSITE MÉTALLIQUE, CATALYSEUR DE PILE À COMBUSTIBLE, PILE À COMBUSTIBLE, MATÉRIAU D'OCCLUSION D'HYDROGÈNE, RÉSERVOIR À HYDROGÈNE, ET PROCÉDÉ DE PRODUCTION DE MATÉRIAU EN CARBONE COMPOSITE MÉTALLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2014 JP 2014187481**

(43) Date of publication of application:
**06.09.2017 Bulletin 2017/36**

(73) Proprietor: **Toray Industries, Inc.**
**Tokyo 103-8666 (JP)**

(72) Inventors:
• **MIHARA, Takaaki**
  **Otsu-shi**
  **Shiga 520-8558 (JP)**
• **TANAKA, Kentaro**
  **Otsu-shi**
  **Shiga 520-8558 (JP)**

• **TAKEUCHI, Kosaku**
  **Otsu-shi**
  **Shiga 520-8558 (JP)**
• **HORIGUCHI, Tomoyuki**
  **Otsu-shi**
  **Shiga 520-8558 (JP)**

(74) Representative: **Mewburn Ellis LLP**
**Aurora Building**
**Counterslip**
**Bristol BS1 6BX (GB)**

(56) References cited:
WO-A1-2012/131628     WO-A1-2014/148303
WO-A1-2016/009935     JP-A- 2001 151 834
JP-A- 2003 172 499     JP-A- 2004 059 904
JP-A- 2004 071 253     JP-A- 2005 500 229
JP-A- 2010 115 636     US-A1- 2012 041 121

• **None**

**Description**

TECHNICAL FIELD

The present invention relates to a metal composite carbon material which can be spread for various applications and a production method for the metal composite carbon material.

BACKGROUND ART

As metal composite carbon materials, composites of activated carbons having both macropores which are relatively large pores and micropores, such as particulate activated carbons and activated-carbon fibers, or fine carbons represented by carbon nanotubes and meso-porous carbons produced from meso-porous silica or zeolite template, with metal fine particles, metal oxide fine particles or the like, are known.

For example, Patent Document 1 discloses a porous carbon in which a carbonaceous wall constituting an outer wall of mesopores forms a three-dimensional network structure; and in which micropores are formed at positions in the carbonaceous wall facing the mesopores, the porous carbon being a carbon material in which metal particles are dispersed in the carbonaceous wall and at least a portion of the metal particles is located with a portion of the particle surface exposed to the micropores. Further, Patent Document 2 discloses a microporous carbon material having a three-dimensional long-period regular structure having a size in the range of not less than 0.7 nm and not more than 2 nm, and micropores, in which transition metals are fixed to the surfaces of the micropores.

PRIOR ART DOCUMENTS

Patent Document 1: JP 2011-1224A and Patent Document 2: JP 2010-115636A.
US 2012 / 0041121 A describes a porous carbon material having a bicontinuous phase structure which may be used in a fuel cell. According to [0257] - [0258] it is preferable to set the pore size of an outermost fuel permeating layer to $0.1\mu m$ to 10pm and those of the electrodes to 10 to 100 nm. Noble metal particles are loaded on the electrodes. JP 2004 071253 A discloses a metal composite carbon material for a fuel cell catalyst. A carrier is composed of a carbon material including mesoporous carbon particles in one part and a catalyst layer supported thereon. Examples include Pt microparticles carried in 2 to 3 nm pores. EP3171437 A concerns an electrode material for a metal-air battery in which a carbon skeleton and voids form respective continuous structures having a structural period of 0.002 to 10 $\mu m$. The material may have fine pores having an average diameter of 0.1 to 10 nm on the surface thereof.

PROBLEMS TO BE SOLVED BY THE INVENTION

In the carbonaceous wall present at the ends of the template particles disclosed in Patent Document 1, however, there are practically no continuous pores present and the contact of the fixed metal fine particles and metal oxide fine particles with the fluid is limited.

As for the three-dimensional long-period regular structure of the carbon material disclosed in Patent Document 2, the pores are extremely small to permeate and diffuse a fluid into the inside of the structure, so that the interfaces between the fluid and the carbon material, and the metal fine particles or the metal oxide fine particles have been small.

The present invention addresses the problem of providing a metal composite carbon material having a large contact interface between a fluid and metal fine particles, and can exhibit high catalytic performance when used as a catalyst.

SOLUTIONS TO THE PROBLEMS

The object of the present invention is achieved by a metal composite carbon material having metal fine particles supported in a continuous porous structure, as defined in the accompanying claim 1.

EFFECTS OF THE INVENTION

Since the metal composite carbon material of the present invention has the continuous porous structure, it becomes possible to permeate and diffuse a fluid into pores which constitute the continuous porous structure. Furthermore, since branches composed of carbon are continuous, the metal composite carbon material has higher electrical conductivity and thermal conductivity. In addition, an effect in which the branches support one another to maintain the structure body is produced, and due to this effect, the material has some degree of resistance to deformations such as ones caused by tension or compression. Further, since the structural period of the continuous porous structure is larger than 20 nm and 10 μm or smaller, the flow resistance of the fluid is fully reduced and the efficiency of the permeation and the diffusion increases. As a result of this, the efficiencies of reaction, adsorption/desorption, etc. can be enhanced. In addition, the metal fine particles supported in the continuous porous structure provides high efficiency of reaction, adsorption/desorption, etc.

BRIEF DESCRIPTION OF THE DRAWINGS

Fig. 1 illustrates a scanning electron photomicrograph of a metal composite carbon material of Example 1.
Fig. 2 illustrates a transmission electron photomicrograph of the metal composite carbon material of Example 1.

EMBODIMENTS OF THE INVENTION

<Metal Composite Carbon Material>

[Continuous Porous Structure]

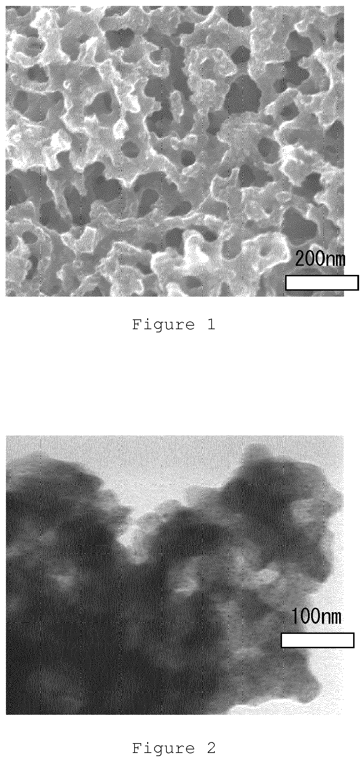

The metal composite carbon material of the present invention has metal fine particles supported in a continuous porous structure in which a carbon skeleton and voids form respective continuous structures.
The term "continuous porous structure" means a structure in which a carbon skeleton and voids are respectively continued. The phrase "has/having a/the continuous porous structure" herein means that when a specimen of the metal composite carbon material which has been sufficiently cooled, for example, in liquid nitrogen, is cut with tweezers or the like and the cut surface is examined with a scanning electron microscope (SEM) or the like, a structure in which a carbon skeleton (branches) and voids (pores) are respectively continuous and entangled is observed, as illustrated in FIG. 1.
The metal composite carbon material of the present invention can be made to exhibit the fractionating properties such as separation, adsorption, and elimination of substances by filling and/or passing a fluid into or through the pores which constitute the continuous porous structure. Furthermore, since the continued branches bring about increased electrical conductivity, the metal composite carbon material can be provided as a battery material having low resistance and low loss. Further, high thermal conductivity enables the heat generated inside the continuous porous structure to be rapidly transferred to the outside and makes it possible to maintain high evenness in temperature, which in turn allows stable chemical reaction or adsorption/desorption, as well as allowing the material to have high heat resistance. In addition, due to the effect in which the branches support one another to maintain the structure body, this material has high resistance to deformations such as ones caused by tension, compression, etc.
The continuous porous structure of the present invention is not a so-called structure having crystallinity but a structure having mild regularity. The term "a structure having crystallinity" herein means a so-called micro phase separation structure which a monodisperse block copolymer or the like exhibits, while the term "a structure having mild regularity" means a modulated structure such as a spinodal decomposition phase separation. As for the structure having crystallinity, for example, due to excessively high regularity of the structure body when a fluid flows in and out, the effect of diffusion or mixing is hardly obtained, and further, the relaxation time when a fluid flows in and out is limited, so that only a material having extremely unbalanced characteristics may be obtained. In the meantime, as for the structure having mild regularity in the present invention, when a fluid flows in and out, due to moderately irregular structure, the effect of diffusion or mixing may easily be obtained. This makes the concentration of the material contained in the fluid uniform, which contributes to effective reaction. In addition, the moderately irregular structure may distribute the relaxation time, so that even under the environment where the flow rate varies, the material can easily exhibit stable characteristics.
In the present invention, the continuous porous structure has a structural period of larger than 20 nm and 10 μm or smaller. The structural period is determined by irradiating a specimen with X-rays and calculating the structural period from the scattering angle $2\theta$ corresponding to the position where a scattered-light intensity has a peak value, using the following equation.

[Mathematical Formula 1]

$$L = \frac{\lambda}{2\sin\theta}$$

Structural period: L, $\lambda$: wavelength of incident X rays

When the structural period exceeds 1 $\mu$m and the X-ray scattering peak cannot be observed, a co-continuous structural portion of the composite carbon material is three-dimensionally photographed by an X-ray CT method, the obtained image is subjected to Fourier transform to give a spectrum, and the structural period is determined by calculation in the same manner as above. That is, the term "spectrum" herein means data representing a relationship between a one-dimensional scattering angle and a scattered-light intensity which are obtained by an X-ray scattering method or a Fourier transform from the X-ray CT method.

As long as the continuous porous structure has a structural period of larger than 2 nm, the fluid is allowed to be easily permeated or diffused in voids in the continuous porous structure, so that the metal composite carbon material can exhibit excellent characteristics when used as a catalyst. Meanwhile, so long as the continuous porous structure has a structural period of 10 $\mu$m or smaller, the metal composite carbon material as a structural body has very few defects and can be a mechanically excellent material. A value of structural period can be selected within the above-mentioned range arbitrarily in accordance with applications. In particular, when the viscosity of the fluid used is higher than 100 cP, setting the value of the structural period to 10 nm or larger can reduce the pressure loss to thereby provide a material having high response rate, which is preferable . For the purpose of reducing the pressure loss, the value of the structural period is selected to be 20 nm or larger.

When the material has the continuous porous structure oriented, the value of the structural period may vary depending on the incident direction of X-rays. In such case, when the metal composite carbon material of the present invention is irradiated with X-rays from any direction and then measured, the structural period may be within the above-mentioned range. The continuous porous structure is formed with evenness when observed from any direction. Therefore, a fluid can be filled and/or passed into or through the continuous porous structure, and it is possible to ensure electrical conductivity and thermal conductivity through the branches.

Here, when the structural period of the metal composite carbon material having metal fine particles supported thereon is measured, the metal fine particles are removed in advance by elution or other treatment. That is, using a conventionally known wet etching technique or the like, the metal fine particles are subjected to corrosion by oxidation and are then dissolved to remove. Thereafter, the structural period of the metal composite carbon material is measured. When the structural period is within the predetermined numerical value defined in the present invention, it is judged that the material has the predetermined numerical value range. For example, depending on the measurement method such as an X-ray CT method, the measurement of the structural period of the carbon material portion except the metal fine particles may be possible without removing the metal fine particles in advance. In such case, the structural period in which the influence of the metal fine particles is excluded may be determined on the computer based on the analyzed data of the material in a state where metal fine particles are contained.

The continuous porous structure preferably has an average porosity of 10 to 80%. Here, the term "average porosity" refers to a porosity determined by obtaining a precisely formed cross-section of an embedded specimen by the cross-section polisher method (CP method), examining the cross-section at a magnification regulated so as to result in 1$\pm$0.1 (nm/pixel) and at a resolution of 700,000 pixels or higher, setting in the resultant image a square examination region for calculation in which each side has 512 pixels, and calculating the average porosity using the following equation, in which A is the area of the whole examination region and B is the area of the pores.

Average porosity (%) = B/A x 100

The higher the average porosity thereof, the more the efficiency of filling can be heightened when the material is composited with other materials, and the lower the pressure loss and the more the resistance to permeation and diffusion can be reduced when the continuous porous structure is used as a channel for fluids. Accordingly, a material in which the higher the average porosity thereof, the higher the rate of response to chemical reaction or adsorption/desorption can be obtained. Meanwhile, the lower the average porosity thereof, the higher the resistance to forces applied in cross-sectional directions, such as compression and bending, and hence the durability is increased in terms of handleability and use under pressure, which is advantageous. In view of these, the average porosity of the continuous porous structure is preferably in the range of 15 to 75%, more preferably in the range of 18 to 70%.

In the present invention, it is preferable that the continuous porous structure has at least one peak diameter in the range of 5 to 400 nm in a pore diameter distribution curve thereof. The pore diameter distribution is determined by the mercury intrusion method or the gas adsorption method. The mercury intrusion method is suitable for acquiring the pore diameter distributions of materials having a long structural period because pore diameter distribution curves in a wide range of 5 nm to 500 $\mu$m can be acquired therewith. In contrast, the gas adsorption method is suitable for acquiring pore diameter distributions in a range of up to about 100 nm, which is small as compared with that in the mercury intrusion method. For determining a pore diameter distribution, either the mercury intrusion method or the gas adsorption method can be suitably selected in accordance with the structural period of the metal composite carbon material of the present invention.

The smaller the value of the peak diameter in the pore diameter distribution curve, the shorter the distance between the carbon material and the material of another kind composited therewith. Especially in the range of about tens of nanometers or lower, it is easy to form a state in which a current is apt to flow between the material of another kind and the carbon material of the present invention, because of the quantum tunnel effect. Meanwhile, the larger the value of the peak diameter in the pore diameter distribution curve, the easier the compositing with particles having a large diameter, etc. In view of these, the peak diameter in the pore diameter distribution curve of the carbon material of the present invention is more preferably in the range of 5 to 350 nm, even more preferably in the range of 5 to 300 nm.

Incidentally, as described later, even in the case where the carbon material has a portion having substantially no continuous porous structure, the pore diameter distribution of the continuous porous structure can be determined by determining the pore diameter distribution of the whole material. The pore diameter distribution curve of the continuous porous structure can be approximated by the pore diameter distribution curve of the whole material.

[Small Pores]

Further, the metal composite carbon material of the present invention also has small pores having an average pore diameter of 0.4 to 10 nm on its surface. The term "surface" herein means a contact surface with all externals of the carbon portion including the surface of the carbon skeleton in the co-continuous structural portion of the carbon material. The small pores can be formed on the surface of the carbon skeleton in the co-continuous structural portion and/or on a portion having substantially no co-continuous structure to be described later. The small pores are preferably formed on the surface of the carbon skeleton in the portion having at least co-continuous structure. An average pore diameter of 0.01 nm or larger allows the small pores to work for an adsorber material, an active material, etc. In the meantime, when having an average pore diameter of 10 nm or less, the small pores can efficiently exhibit functions of adsorption or the like. It is preferable that the diameter of the small pore is properly adjusted to about 1.1 to 2.0 times relative to the diameter of the desired adsorber material or the like, from the viewpoint of efficient adsorption, etc. Such small pores have an average pore diameter of not less than 0.4 nm, more preferably not less than 0.5 nm, and preferably not more than 5 nm, more preferably not more than 2 nm.

In the present invention, the average diameter of the small pore means a measurement value obtained by either a BJH method or an MP method. That is, when either of the measurement values by the BJH method and MP method is within the range of 0.01 to 10 nm, it is judged that the metal composite carbon material has a small pore having an average diameter of 0.01 to 10 nm on its surface. The preferable range of the small pore diameter is the same as the above-mentioned range. The BJH method and the MP method are widely used as a pore diameter distribution analyzing method, and the average pore diameter can be obtained based on a desorption isotherm which is obtained by adsorbing/desorbing nitrogen to a specimen. The BJH method is a method of analyzing the distribution of small pore volume relative to the small pore diameter when the small pore is assumed to have a cylindrical shape according to the Barrett-Joyner-Halenda standard model. The method may be applied to small pores having a diameter of mainly 2 to 200 nm (for details, see J. Amer. Chem. Soc., 73, 373, 1951, etc.). Furthermore, the MP method is a method of obtaining a pore diameter distribution by determining the small pore volume based on the external surface area and the thickness of the adsorption layer (equivalent to the radius of the small pore because the small pore has a cylindrical shape) of each section obtained from variations in the gradient of the tangent line at each point of the adsorption isotherm, and then plotting the thickness of the adsorption layer (for details, see Jounal of Colloid and Interface Science, 26, 45, 1968, etc.). The method can be applied to a pore having a diameter of mainly 0.4 to 2 nm. In the present invention, all the results from these methods are rounded off to one decimal place and the values thus obtained are used.

Further, the metal composite carbon material of the present invention has a small pore volume determined by either the BJH or MP method of preferably not less than 0.05 cm$^3$/g, more preferably not less than 0.5 cm$^3$/g, and even more preferably not less than 1.0 cm$^3$/g. The small pore volume of not less than 0.05 cm$^3$/g further improves an adsorption performance of the adsorber material or the active material, and the continuous porous structure enables the resistance to permeation and diffusion of a fluid to reduce, so that a metal composite carbon material having excellent reactivity can be preferably obtained. The upper limit of the small pore volume is not particularly limited, and when the volume exceeds 10 cm$^3$/g, the strength of the metal composite carbon material reduces and, hence, the handleability tends to worsen, which is not preferable.

In the metal composite carbon material of the present invention, the voids or metal fine particles in the co-continuous structural portion may have an influence on the small pore diameter distribution or the small pore volume determined by the BJH or MP method. That is, these measurement values may be obtained as values of not purely small pores alone but values reflecting the presence of voids and metal fine particles . Even in such case, it is judged that the measurement values obtained by these methods are the average diameter of small pores and the small pore volume in the present invention. Further, when the small pore volume determined by the BJH or MP method is less than 0.05 cm$^3$/g, it is judged that there is no small pore formed on the material surface.

It is preferable that the metal composite carbon material of the present invention has a BET specific surface area of not less than 10 m$^2$/g. The BET specific surface area thereof is preferably not less than 200 m$^2$/g, more preferably not less than 1000 m$^2$/g, and even more preferably not less than 1500 m$^2$/g. The BET specific surface area of not less than 10 m$^2$/g causes the area relative to the adsorption material or active material to increase, which improves performance against chemical reaction or adsorption/desorption. The upper limit thereof is not particularly limited, and when the specific surface area exceeds 4500 cm$^2$/g, the strength of the metal composite carbon material reduces and, hence, the handleability tends to worsen. The BET specific surface area of the present invention conforms to JIS R 1626 (1996), and an adsorption isotherm is determined by adsorbing and desorbing nitrogen to the metal composite carbon material, and the determined data can be determined by calculation based on the BET equation.

[Metal Fine Particles]

The metal composite carbon material of the present invention has metal fine particles supported in the above-mentioned continuous pore structure. The metal composite carbon material of the present invention has low flow resistance of the fluid which is permeated and diffused in the continuous porous structure, and almost all voids therein are continuous, so that the effective interface area between the carbon and the fluid which is usable for chemical reaction, adsorption and desorption is extremely large, allowing the function of the supported metal fine particles to be maximized.

The metal composite carbon material containing transition metals as the metal fine particles acts as a material which occludes and stores hydrogen or other material or as a catalyst which accelerates or inhibits chemical reaction. Here, the transition metal is a generic name of elements which are present between Group III elements and Group XI elements in the periodic table. The transition metal is not particularly limited as long as it is within the definition thereof, and is suitably selected in accordance with the purposed application.

The transition metal may be used alone as is; in combination of two or more kinds selected from the transition metals; or in the form of an alloy thereof. In addition, the metal composite carbon material may contain an element other than the transition metals. As the element other than the transition metals, typical elements, alkali metals, alkaline earth metals or the like may be used. The content of the transition metal is not particularly limited as long as it may take advantage of catalytic activity which is characteristic of transition metals, and the content thereof is preferably in the range of 0.1 to 100% by weight. Not less than 0.1% by weight of the transition metal can make full use of the function which the supported metal fine particles possess.

The phrase "metal fine particles supported in the continuous pore structure" represents a state in which the above-mentioned metal fine particles are adhered to the surface of the carbon material or a state in which the above-mentioned metal fine particles are partially embedded in the carbon material. When the metal fine particles are partially embedded in the carbon material, it becomes possible to highly efficiently transfer electrons or heat between the metal fine particles and the carbon materials as a chemical reaction or adsorption/desorption occurs on the surfaces of the metal fine particles, so that catalytic reaction can be highly efficient, which is preferable. The amount of the metal fine particles embedded is not particularly limited, but when the volume of the metal fine particles is set to 100%, it is preferable that 0 to 50% by volume of the metal fine particles are embedded from the viewpoint of obtaining the above-mentioned effect. The upper limit of the embedded amount is not particularly limited and is preferably not more than 90% by volume from the viewpoint of sufficiently bringing the surfaces of the metal fine particles into contact with a fluid. The embedded amount can be determined by calculation from a three-dimensional image observed by an electron-beam tomography, a continuous fragment method with a focused ion beam, or an X-ray CT method. The embedded amount is determined by the electron-beam tomography when the diameter of the metal fine particle is less than 100 nm; by the continuous fragment method with a focused ion beam when it is between 100 nm and 1 $\mu$m; or by the X-ray CT method when it is larger than 1 $\mu$m.

The amount of the metal fine particles supported is not particularly limited as long as the amount may allow the function of the metal fine particles to sufficiently exhibit. The more the supported amount, the more the absolute surface area capable of sufficiently exhibiting the function of the metal fine particles increases. Conversely, the less the supported amount, the more the resistance to permeation and diffusion of a fluid reduces, which can obtain a material having good responsiveness and also being lightweight. In view of this, when the carbon material is set to 100 parts by weight, the amount of the metal fine particles supported is preferably 0.01 to 300 parts by weight.

The metal fine particles herein may have any shape such as a needle shape, a plate shape, a spherical shape, and a tube shape. The size of the metal fine particle is not particularly limited, and when the metal fine particle has an average diameter 0.8 times or less the structural period of the continuous porous structure which constitutes the metal composite carbon material of the present invention, it is easy to composite the metal fine particles into the continuous porous structure, which is preferable. The average particle size of the metal fine particle can be determined by a conventionally known method. The smaller the average diameter, the more the specific surface area of the fine particle increases, which enhances the probability of contact with the fluid, thereby maximizing the function of the fine particles, which is preferable. Thus, the average diameter of the metal fine particles is 8 $\mu$m or lower, preferably 1 $\mu$m or lower, and more preferably 100 nm or lower.

Platinum is preferably used to impart the metal fine particles to oxidation resistance. Platinum is a metal which is chemically stable and has high catalyst performance, so that it serves as a catalyst having excellent oxidation resistance, which is preferable. Examples of the metal fine particles include those containing platinum, iron, cobalt, titanium, copper, zirconium, vanadium, chromium, manganese, nickel, molybdenum, ruthenium, rhodium, palladium, or lanthanoide such as lanthanum and cerium. In the present invention, the metal fine particles contain one or more elements selected from ruthenium, rhodium, palladium, osmium, iridium and platinum.

When the metal composite carbon material of the present invention is used as a hydrogen storage material, a transition metal which forms a metallic bond or interstitial hydride (M-H-bond) is preferable as the metal to be used for the metal fine particles.

[Carbon Crystal Grains]

The metal composite carbon material of the present invention preferably contains carbon crystal grains in the carbon material portion. The inclusion of carbon crystal grains enables the metal composite carbon material to heighten thermal conductivity and electrical conductivity through the carbon crystal grain portion. Further, the carbon crystal grain tends to have a high elastic modulus as compared with a portion which is substantially amorphous other than the carbon crystal grains. Hence, there is significant improvement observed in the elastic modulus and compressive strength of the whole metal composite carbon material. Therefore, for example, in the case where the metal composite carbon material is used in an electrode material or the like which significantly changes in volume at the time of charging and discharging, the metal composite carbon material is not ruptured along with the volume change. Therefore, even though the charging and discharging are repeated, the metal composite carbon material rarely changes the property. Further, in the metal composite carbon material having the form of a fiber or a film, the inclusion of the carbon crystal grains can prevent the material from being easily ruptured and can contribute to efficiently produce a final product having excellent quality at the time of handling, modularizing, an assembly step, etc.

Although the carbon crystal grain size is not particularly limited, the smaller the carbon crystal grain size, the more the absolute distance between the carbon crystal grains tends to approach one another, and the carbon crystal grain allows the conductivity and thermal conductivity to improve without significantly changing the mechanical property. Further, the larger the size thereof, the more the capability of incorporating an ion or the like in the carbon crystal grain is heightened. Therefore, when a metal such as lithium is intercalated in the carbon crystal grain, the efficiency of such intercalation can be heightened. In view of these, the carbon crystal grain size is preferably in the range of 1 to 1000 nm. In particular, when the carbon crystal grain size is in the range of 1 to 100 nm, the mechanical property, and conductivity and thermal conductivity are in excellent balance. This configuration is hence preferred. Further, when the carbon crystal grain size is in the range of 50 to 1000 nm, the efficiency of the intercalation can be heightened, so that the carbon crystal grain can provide a preferable property of particularly an electrode material.

When the metal composite carbon material of the present invention is thinly cut out using a convergence ion beam or the like, and the cut-out piece is then observed with a transmission electron microscope or the like, the presence or absence of the carbon crystal grain can be confirmed with black contrasts. Each of the carbon crystal grain size can be determined by obtaining an area of the black contrast portion and converting the area to a diameter of a circle equivalent to the area as the carbon crystal grain size. The term "carbon crystal grain size" simply described herein means a number average value, and specifically, the carbon crystal grain size can be determined by the method described in example to be described later.

The carbon crystal grain is present in a region having a low luminance as compared with the other places. As for the carbon crystal grain, first, a median filter having a radius of 2 pixels is applied to a photographed image, a luminance histogram of the image is then obtained, the luminance value is divided by the maximum frequency value near the median between the maximum value and the minimum value, and the resultant value is expressed as the frequency by percentage. A straight line expression is determined by calculation using the value of a point at which the frequency from the dark side where the luminance value is low exceeds 20% and the value of a point at which the frequency exceeds 50%, and the luminance value at the time of setting the frequency to 0% is calculated from the formula of the straight line thus obtained (the x fragment is calculated when the luminance and the frequency are regarded as x and y, respectively). A group of pixels having lower luminance values than the resultant luminance value, which are black contrasts, represents the carbon crystal grain. Here, among the group of pixels, a group of less than 30 pixels which are recognized as noises is excluded from those representing the carbon crystal grain.

When a proportion, in which the area of the black contrast portion accounts for the whole area used for the analysis, is referred to as an existence proportion of the carbon crystal grain, the existence proportion of the carbon crystal grain is preferably 0.1% or more. Not less than 0.1% of such existence proportion thereof allows conductivity and thermal conductivity to be sufficiently imparted to the material. The upper limit of the existence proportion of the carbon crystal grain is not particularly limited. However, when the upper limit thereof is less than 70%, the mechanical property, and conductivity and thermal conductivity are in excellent balance. This configuration is hence preferred.

The carbon crystal which constitutes the carbon crystal grain means a carbon portion having a crystal structure with a unit cell or having a structure in which the crystal structure is slightly irregular. A so-called perfect crystal may be a graphite crystal or a diamond crystal. When the carbon crystal is a graphite crystal or has a slightly irregular structure of a graphite crystal, it becomes possible to heighten the conductivity and thermal conductivity of the carbon material. Therefore, it is suitable for electrode applications for which these properties are particularly required. Further, when the carbon crystal is a diamond crystal or has a slightly irregular structure of a diamond crystal, it becomes possible to significantly heighten the mechanical properties such as tension and compression, and the elastic modulus and strength can also be easily balanced. Therefore, it is suitable.

Whether the carbon crystal is a graphite crystal or has a slightly irregular structure of a graphite crystal can be judged when the X-ray diffraction profile measured by a powder method has a peak near a diffraction angle of 24.5 to 26.6°. In particular, in the case where the carbon crystal has a slightly irregular structure of a graphite crystal, conductivity, thermal conductivity, and mechanical property can be easily balanced. This embodiment is hence preferred. In the case where the carbon crystal has a slightly irregular structure of a graphite crystal, it can be judged by whether the X-ray diffraction profile measured by a powder method has a peak between diffraction angles of 25 to 26°.

Whether the carbon crystal is a diamond crystal or has a slightly irregular structure of a diamond crystal can be judged when the X-ray diffraction profile measured by a powder method has a peak near a diffraction angle of 42 to 45°.

Here, when the X-ray diffraction profile is measured, the metal fine particles are removed in advance by elution or other treatment. In the case where the metal fine particles remain, a similar diffraction peak appears in the above-mentioned range, which may result in noise. Using a conventionally known wet etching method, the metal fine particles are subjected to corrosion by oxidation and then dissolved to be removed. Then, the profile is measured. Whether the measured value is applicable to those numerical value range or not is judged. That is, when the X-ray diffraction profile determined after wet etching is within the predetermined numerical value specified in the present invention, it is judged that the composite carbon material has the predetermined numerical value range.

Although the carbon crystal grains may be contained in the branches which constitute a continuous porous structure or may be contained in the other portions, it is preferable that the carbon crystal grains is at least contained in the branches which constitute a continuous porous structure. When the carbon crystal grains are present in the branches which constitute a continuous porous structure, the function to mediate conductivity and thermal conductivity can be remarkably exhibited and it also becomes easy to improve the mechanical property of the whole metal composite carbon material. In particular, by including the carbon crystal grains in the branches which constitute the continuous porous structure, the carbon crystal grains become close in physical distance to the pores which constitute the continuous porous structure. Therefore, when the carbon crystal grains exhibit the function due to a contact with, for example, an electrolytic solution, an emulsion, a solution, or the like, adsorption, desorption, reaction, etc. can be efficiently proceeded.

In the energy dispersive X-ray spectrometry measurement of the carbon crystal grain portion observed with the above-mentioned transmission electron microscope, the existence proportion of the carbon atom is calculated from the X-ray intensity equivalent to the carbon atom, and the existence proportion of the carbon atom in the carbon crystal grain is preferably 50% or more. When the existence proportion of the carbon atom is not less than 50%, it is possible to maintain the conductivity and thermal conductivity of the carbon crystal grain sufficiently high.

[Portion Having Substantially No Continuous Porous Structure]

The metal composite carbon material of the present invention may have a portion having substantially no continuous porous structure in the carbon portion. The term "portion having substantially no continuous porous structure" means that a portion in which any pores have a size less than the resolution and hence no distinct pores are observed when a cross-section formed by the cross-section polisher method (CP method) is examined at a magnification resulting in $1 \pm 0.1$ (nm/pixel) is a portion which is present over an area that is not less than the region of a square in which each side corresponds to three times the above-mentioned structural period L.

In the portion having substantially no continuous porous structure, the carbon is densely packed and the electronic conductivity is hence enhanced. Consequently, the electrical conductivity and the thermal conductivity can be maintained on or above a certain level. Because of this, in the case where the metal composite carbon material which has a portion having substantially no continuous porous structure is used, for example, as a battery material, it is possible to rapidly discharge the heat of reaction from the system and to keep the resistance to electron transfer low. Consequently, a contribution to the production of high-efficiency batteries can be attained. In addition, the presence of the portion having no continuous porous structure also provides an advantage in that it is possible to remarkably heighten the resistance to, in particular, compressive rupture.

The above mentioned carbon crystal grains may be contained in the portion having substantially no continuous porous structure. The presence of the carbon crystal grains allows electrical conductivity and thermal conductivity to be secured. In particular, due to the presence of the carbon crystal grains in the portion having substantially no continuous porous structure, a pseudo network between the carbon crystal grains through portions other than the carbon crystal grains is formed. Therefore, it becomes possible to heighten the resistance to physical forces, such as compression and tension.

The proportion of the portion having no continuous porous structure is not particularly limited, and can be regulated arbitrarily in accordance with applications. However, it is preferable in any case that the portion having no continuous porous structure accounts for 5% by volume or more. This is because this configuration has mechanical resistance such as compression, tension, or shearing, and makes it possible to maintain electrical conductivity and thermal conductivity at a high level.

In the case where the carbon portion of the metal composite carbon material according to the present invention has a configuration in which the portion having no continuous porous structure is formed around the portion having the continuous porous structure so as to cover the portion having the continuous porous structure, it is preferable because it is possible to more efficiently permeate and diffuse a fluid into the pores which constitute the continuous porous structure and the metal composite carbon material is excellent in strength. While in the following, the metal composite carbon material of this configuration will be described in this description, the portion having the continuous porous structure is referred to as "core layer" and the portion having no continuous porous structure which covers the core layer is referred to as "skin layer".

[Core Layer]

The core layer is a layer which has a continuous porous structure. In the case where the metal composite carbon material has such a structure, it is easy to immerse another material into the continuous porous structure from a cross-section of the material which is, for example, in the form of a fiber or a film. In addition, this material can be utilized as a path for permeating and diffusing a fluid to pass therethrough. It is, therefore, possible to efficiently bring the metal fine particles and a fluid into contact with one another and to utilize this material as a channel of a reaction column, for example.

Furthermore, since the continuous porous structure of the present invention forms an even structure, the metal composite carbon material is excellent in mechanical property regarding compression, bending, tension, etc., and the structure contributes to improvement in the brittleness which is characteristic of carbonized materials.

It is preferable that the continuous porous structure of the core layer is formed so that a central part thereof has a structural period of larger than 20 nm and 10 $\mu$m or smaller. The term "central part" herein means the gravity center on the assumption that the mass distribution in the cross-section of the metal composite carbon material is even. In the case of a powder particle, for example, the gravity center thereof is the central part. In the case where the material is in the form of a fiber which has a round cross-section, the "central part" indicates a point where the distances from the fiber surface are the same in a cross-section of the fiber perpendicular to the fiber axis. However, in the case of a film shape in which it is difficult to clearly define the gravity center thereof, the "central part" thereof is defined as follows. That is, a vertical line is drawn from the film surface in the cross-section perpendicular to TD or MD direction. Then, an aggregate of points which are placed at one-half of the film thickness on the vertical line is defined as the "central part". Similarly, in the case of a hollow fiber in which the gravity center thereof is not within the cross-section of the material, the "central part" thereof is defined as follows. That is, a vertical line is drawn from the tangent line of the outer surface of the hollow fiber. Then, an aggregate of points which are placed at one-half of the material thickness on the vertical line is defined as the "central part".

[Skin Layer]

The term "skin layer" means the layer which is formed around the core layer and has substantially no continuous porous structure.

The thickness of the skin layer is not particularly limited, and can be suitably selected in accordance with applications of the material. However, in the case where the skin layer is too thick, this composite carbon material tends to have a reduced porosity. Consequently, the thickness thereof is preferably 100 $\mu$m or less, more preferably 50 $\mu$m or less, most preferably 20 $\mu$m or less. Although there is no particular lower limit thereon, the thickness of the skin layer is preferably 1 nm or larger from the standpoints of maintaining the shape of the material and making the skin layer exhibit a function different from that of the core layer.

The metal composite carbon material of the present invention as described above is capable of having an asymmetrical structure including a core layer and a skin layer. In the case where the metal composite carbon material having such an asymmetrical structure is composited with metal fine particles to obtain a metal composite carbon material, it is possible to produce a metal composite carbon material in which the skin layer part has not been filled with the metal fine particles and the continuous porous structure of the core layer only has been filled with the metal fine particles . Such a metal composite carbon material can be configured so that the skin layer part exhibits the properties possessed by the carbon material itself, such as chemical stability, and thermal and electrical conductivity, and that metal fine particles having various functions are supported on the core layer, and is thought to be used in a wide range of applications including battery materials and catalyst supports. Furthermore, since this metal composite carbon material has an asymmetrical structure including a skin layer and a core layer, the function by the metal fine particles supported in the continuous porous structure can be applied with high efficiency when the metal composite carbon material is used, for example, as a reaction column, so that the reaction rate improves and leakage of a fluid from the skin layer can be prevented, thereby resulting in higher flexibility in channel design. This embodiment is hence preferred.

[Shape of Metal Composite Carbon Material]

The shape of the carbon material which constitutes the metal composite carbon material of the present invention is not particularly limited, and examples thereof include a bulk shape, a rod shape, a flat plate shape, a disk shape, and a spherical shape. Of these, the metal composite carbon material is preferably in the form of a fiber, a film, or a powder.

The term "in the form of a fiber" means a shape in which the average length is at least 100 times the average diameter. The material may be filaments or long fibers, or may be staples, short fibers, or chopped strands. The shape of the cross-section thereof is not limited at all, and the cross-section can have any shape such as a round cross-section, a multi-leafed cross-section, e.g., triangular cross-section, a flat cross-section, or a hollow cross-section. The average diameter of the carbon material in the form of a fiber is not particularly limited, and can be determined arbitrarily in accordance with applications. The average diameter thereof is preferably 10 nm or larger from the standpoint of maintaining the handleability and porousness. From the standpoint of ensuring flexural rigidity to improve the handleability, the average diameter thereof is preferably 5,000 $\mu$m or less.

In particular, fibers formed of a core layer having a continuous porous structure and a skin layer which is formed so as to cover around the core layer and has substantially no continuous porous structure is a preferred embodiment of the metal composite carbon material according to the present invention. Such fibers are suitable as a reaction column material because the fibers allow a fluid to fill or pass into or through the core layer. The fibers themselves are fabricated into a module. This configuration allows a fluid to pass through the voids of the core layers to be in contact with the metal fine particles and the fluid, thereby causing adsorption and desorption or chemical reaction and ensuring a channel for fluids. Further, a synergistic effect of a stirring effect by the branches which constitute the continuous porous structure achieves high efficient reaction. Furthermore, when a fluid is filled or passed at a high pressure, this material shows high compressive resistance because the material has such a structure that the branches which constitute the portion having the continuous porous structure support one another. Therefore, rupture by compression can be prevented to achieve stable operation.

Furthermore, due to the presence of the skin layer, the material can have electrical conductivity and thermal conductivity in combination, making it easy to remove the heat of reaction which accompanies the chemical reaction. In addition, the presence of the skin layer enables the deformation and rupture which may be caused by pressurization due to the pressure loss of the fluid to be minimized, and the reaction column material can show stable performance. Moreover, due to the presence of the skin layer, the material has enhanced resistance to forces applied in cross-sectional directions, so that the module can be operated at high pressures, making it possible to stably proceed a reaction or the like which proceeds under high pressure only. This configuration is hence preferred.

The metal composite carbon material of the present invention having the form of a film can be suitably used in application including battery materials, and reaction column packing materials. The thickness of the film is not particularly limited, and can be determined arbitrarily in accordance with applications. However, the thickness thereof is preferably 10 nm or larger when handleability is taken into account, and is preferably 5,000 $\mu$m or less from the standpoint of preventing damages due to flexing.

In particular, a film which has a core layer having a continuous porous structure and a skin layer having substantially no continuous porous structure on one-side or both-side surfaces thereof allows the skin layer to retain electrical conductivity and thermal conductivity at a high level and the skin layer functions as an interface which is suitable, for example, for adhesion to other materials. This embodiment is hence preferred. In the case where this material has a configuration in which the skin layer is formed only on one surface of the film, it is easy to penetrate a fluid into the core layer, which is the portion having the continuous porous structure. This makes it easy to composite with metal fine particles and the fluid tends to be permeated and diffused thereinto during use. Therefore, when the material is used in battery materials or reaction column packing materials, the reaction efficiency can be heightened.

In the case where the metal composite carbon material of the present invention is in the form of a powder, this material can be applied, for example, to battery materials, catalyst material, etc. The particle size of the material having a powder form is not particularly limited, and can be suitably selected in accordance with applications. The particle size in the range of 10 nm to 10 mm is preferable because the material can be handled as a powder. In particular, the powder having a particle size of 10 $\mu$m or less, when used, for example, as a solid ingredient for constituting a paste, gives an exceedingly smooth paste and, hence, this paste can be prevented from causing defects such as paste peeling or cracking in steps of application or the like. Meanwhile, the powder having a particle size of 10 nm or more allows a fluid to sufficiently permeate and diffuse. This material is hence a preferred embodiment.

When the metal composite carbon material in the form of a powder has a portion having no continuous porous structure, a fluid that flows through the powder passes along the portions having no continuous porous structure. As a result, the channels are complicated, and the fluid can be efficiently mixed, which is preferable. The portion having no continuous porous structure accounts for some of each of the particles constituting the powder, i.e., some of each particle. Because of this, the electrical conductivity and thermal conductivity within the particle can be remarkably heightened. In addition, the compressive strength of the particle itself can be heightened, thereby inhibiting performance deterioration due to rupture from occurring at high pressures or deformations such as ones caused by compression or tension. Furthermore, the respective particles come into contact with one another through the portions having no continuous porous structure, thereby making it possible to further heighten the electrical conductivity and thermal conductivity. Further, a fluid that flows through the powder passes along the portions having no continuous porous structure. As a result, the channels are complicated, and the fluid can be efficiently mixed. Having a portion having no continuous porous structure can thus impart properties which make the metal composite carbon material suitable for use as a reaction column packing material or a catalyst material. This material is hence a preferred embodiment. It is preferable that, in the metal composite carbon material in the form of a powder, the proportion of the portion having no continuous porous structure is 5% by volume or higher from the standpoint of enabling the material to exhibit the above-mentioned properties. The proportion of the portion having no continuous porous structure can be determined by conventionally known analytical techniques. The three-dimensional shape of each particle is determined, for example, by electron-beam tomography, X-ray micro-CT, or the like and the proportion is then calculated from the volume of the portion having the continuous porous structure and that of the portion having no continuous porous structure.

In the case where each of the particles constituting the powder includes a core layer having the continuous porous structure and a skin layer which is formed so as to cover around the core layer and has substantially no continuous porous structure, this material can be used as a lightweight filler of hollow particles.

The metal composite carbon material of the present invention is suitably used as a fuel cell catalyst. That is, the fuel cell catalyst of the present invention includes the metal composite carbon material of the present invention. When the metal composite carbon material of the present invention is used as a fuel cell catalyst, the material has a metal fine particle containing at least a transition metal selected from platinum, ruthenium, rhodium, palladium, osmium and iridium supported thereon. When the metal composite carbon material of the present invention particularly contains platinum, the material has high oxidation resistance and the fuel cell catalyst of the present invention can maintain catalytic activity over a long period of time, making it possible to enhance power generation efficiency of the fuel cell. That is, the fuel cell of the present invention includes the fuel cell catalyst of the present invention.

Further, the metal composite carbon material of the present invention is preferably used as a hydrogen-occluding material. That is, the hydrogen-occluding material of the present invention includes the metal composite carbon material of the present invention. When the metal composite carbon material of the present invention is used as a hydrogen-occluding material, the material preferably has metal fine particles containing a transition metal such as AB2, AB5, Ti-Fe, V, Mg alloys, Pd and Ca alloys in at least a portion thereof supported thereon. Since the metal composite carbon material of the present invention has continuous pores formed in the continuous porous structure, the material has a low resistance to permeation and diffusion until hydrogen reaches the metal fine particles, making it possible to efficiently store hydrogen in the metal fine particles. The metal fine particle storing hydrogen tends to generally increase its volume. Even at such time, an effect in which the continuous carbon material portions support one another is produced, and due to this effect, the metal composite carbon material itself is less ruptured even along with a significant volume change, making it possible to achieve a stable hydrogen storing and releasing cycle. In addition, since the continuous carbon material portion has high thermal conductivity even when the reaction heat is transferred along with hydrogen occlusion and release, an effect in which temperature change is rapidly completed is produced, and this effect makes it possible to occlude and release hydrogen with high efficiency. Furthermore, in general, repeated occlusion and release makes the hydrogen-occluding material brittle, thereby pulverizing the material to leave from the system and making the voids between the particles narrower. As a result of this, the hydrogen occlusion efficiency is reduced. The metal composite carbon material of the present invention, however, can hold the pulverized metal fine particles in the continuous porous structure, and even though the occlusion and the release are repeated, the material can achieve less deterioration in performance.

A hydrogen tank uses the metal composite carbon material of the present invention as a hydrogen-occluding material. This tank allows hydrogen to rapidly diffuse into the hydrogen-occluding material and can enhance the efficiency of occlusion and release, which is preferable. That is, the hydrogen tank of the present invention includes the hydrogen-occluding material of the present invention. The proportion of the metal composite carbon material in the hydrogen tank is preferably 1% by weight relative to the total weight of the fillers. The upper limit of the proportion is not particularly limited and is preferably 95% by weight or less because the above-mentioned effect can be sufficiently exhibited and a channel for hydrogen gas can be ensured. To ensure the channel for hydrogen gas, various techniques may be used. A porous material pipe or the like is preferably used because such pipe can satisfy both rapid gas flow in and out in the pipe and gas diffusion into the composite carbon material through the porous material. Examples of the porous material include a material obtained by perforating a metal pipe or by sintering a fibrous metal, a sintered body of metal oxide and a material in the form of a tubular net or the like. Other material and form may be used as the porous material.

<Production Method for Metal Composite Carbon Material>

The metal composite carbon material of the present invention can be produced, for example, by a production method including: a step in which a carbonizable resin and an eliminable resin are brought into a compatibly mixed state to obtain a resin mixture (step 1) ; a step in which the resin mixture in a compatibly mixed state is caused to undergo phase separation and the separated phases are fixed (step 2); a step in which the fixed material is carbonized by pyrolysis under heat (step 3); and a step in which metal fine particles are supported on the carbonized material (step 4).

[Step 1]

Step 1 is a step in which 10 to 90% by weight of a carbonizable resin and 90 to 10% by weight of an eliminable resin are brought into a compatibly mixed state to obtain a resin mixture.

The carbonizable resin herein is a resin which carbonizes upon pyrolysis and remains as a carbon material, having a carbonization yield of 10% or more. As the carbonizable resin, both a thermoplastic resin and a thermosetting resin can be used. In the case of a thermoplastic resin, it is preferred to select a resin which can be made infusible by a simple process such as heating or irradiation with high-energy rays. In the case of a thermosetting resin, there are many cases where a treatment for imparting infusibility is unnecessary, and thermosetting resins are also included in suitable materials. Examples of the thermoplastic resin include polyphenylene oxide, polyvinyl alcohol, polyacrylonitrile, phenolic resins, and wholly aromatic polyesters. Examples of the thermosetting resin include unsaturated polyester resins, alkyd resins, melamine resins, urea resins, polyimide resins, diallyl phthalate resins, lignin resins, and urethane resins. Although these resins may be used either alone or in a mixed state, it is a preferred embodiment from the standpoint of ease of molding that thermoplastic resins are mixed with each other or thermosetting resins are mixed with each other.

It is a preferred embodiment that thermoplastic resins are used among those from the standpoints of carbonization yield, moldability, and economic efficiency. Of these, polyphenylene oxide, polyvinyl alcohol, polyacrylonitrile, and wholly aromatic polyesters are suitably used.

Meanwhile, the eliminable resin is a resin which, subsequently to the step 2 to be described later, can be removed in any of the following stages: simultaneously with a treatment for imparting infusibility; after the treatment for imparting infusibility; and simultaneously with the pyrolysis. The eliminable resin has a carbonization yield of less than 10% after pyrolysis. Methods for removing the eliminable resin are not particularly limited. Suitable methods include: a method in which the eliminable resin is chemically removed, for example, by conducting depolymerization using a chemical; a method in which the eliminable resin is dissolved away by adding a solvent capable of dissolving the eliminable resin; and a method in which the resin mixture is heated to lower the molecular weight of the eliminable resin by thermal decomposition, thereby removing the eliminable resin. These techniques can be used alone or in combination thereof. In the case of using a combination, the techniques may be simultaneously performed or separately performed.

As the method in which the resin is chemically removed, a method in which the resin is hydrolyzed using an acid or an alkali is preferred from the standpoints of economic efficiency and handleability. Examples of resins which are susceptible to hydrolysis by acids or alkalis include polyesters, polycarbonates, and polyamides.

Preferred examples of the method in which the eliminable resin is removed by adding a solvent capable of dissolving the eliminable resin include: a method in which the solvent is continuously supplied to the carbonizable resin and eliminable resin which have been mixed, thereby dissolving and removing the eliminable resin; and a method in which the solvent and the resins are mixed batchwise to dissolve and remove the eliminable resin.

Specific examples of the eliminable resin which are suitable for the method of removing by solvent addition include polyolefins such as polyethylene, polypropylene, and polystyrene, acrylic resins, methacrylic resins, polyvinylpyrrolidone, aliphatic polyesters, and polycarbonates. Of these, amorphous resins are preferred from the standpoint of solubility in the solvent. Examples thereof include polystyrene, methacrylic resins, and polycarbonates.

Examples of the method in which the eliminable resin is lowered in molecular weight by thermal decomposition and removed thereby include: a method in which the carbonizable resin and eliminable resin that have been mixed are heated batchwise to decompose the eliminable resin; and a method in which the carbonizable resin and eliminable resin that have been continuously mixed are continuously supplied to a heating source and heated to thereby decompose the eliminable resin.

It is preferable that the eliminable resin is, among those resins, a resin that disappears in the step 3, which will be described later, through thermal decomposition when the carbonizable resin is carbonized by pyrolysis. It is preferable that the eliminable resin is a thermoplastic resin that does not undergo a large chemical change when the carbonizable resin is subjected to the treatment for imparting infusibility, which will be described later. Specific examples of such eliminable resins include polyolefins such as polyethylene, polypropylene, and polystyrene, acrylic resins, methacrylic resins, polyacetals, polyvinylpyrrolidone, aliphatic polyesters, aromatic polyesters, aliphatic polyamides, and polycarbonates. These resins may be used either alone or in a mixed state.

In the step 1, the carbonizable resin and the eliminable resin are brought into a compatibly mixed state to obtain a resin mixture (polymer alloy). The expression "brought into a compatibly mixed state" herein means that by suitably selecting conditions regarding temperature and/or solvent, a state that no structure in which the carbonizable resin and the eliminable resin are present as separate phases is observed with an optical microscope, is produced.

The carbonizable resin and the eliminable resin may be brought into a compatibly mixed state by mixing the resins alone with each other or by further adding a solvent thereto.

Examples of a system in which a plurality of resins have been brought into a compatibly mixed state include: a system which shows a phase diagram of the upper-limit critical solution temperature (UCST) type in which the resins are in a phase-separated state at low temperatures but form a single phase at high temperatures; and a system which conversely shows a phase diagram of the lower-limit critical solution temperature (LCST) type in which the resins are in a phase-separated state at high temperatures but form a single phase at low temperatures. Furthermore, especially in the case of a system in which at least one of the carbonizable resin and the eliminable resin has been dissolved in a solvent, preferred examples include one in which the phase separation, which will be described later, is induced by the infiltration of a nonsolvent.

The solvent to be added is not particularly limited. Preferred is such a solvent that the absolute value of the difference between the solubility parameter (SP value) thereof and the average of the SP values of the carbonizable resin and eliminable resin is 5.0 or less, the absolute value being an index to dissolving properties. It is known that the smaller the absolute value of the difference from the average of the SP values, the higher the dissolving properties . It is therefore preferable that the difference is zero. Meanwhile, the larger the absolute value of the difference from the average of the SP values, the lower the dissolving properties and the more the compatibly mixed state of the carbonizable resin and eliminable resin is difficult to attain. In view of this, the absolute value of the difference from the average of the SP values is preferably 3.0 or less, most preferably 2.0 or less.

Specific examples of combinations of carbonizable resin and eliminable resin to be brought into a compatibly mixed state, in the case where the system contains no solvent, include polyphenylene oxide/polystyrene, polyphenylene oxide/styrene-acrylonitrile copolymer, wholly aromatic polyester/polyethylene terephthalate, wholly aromatic polyester/polyethylene naphthalate, and wholly aromatic polyester/polycarbonate. Specific examples of the combinations, in the case where the system contains a solvent, include polyacrylonitrile/polyvinyl alcohol, polyacrylonitrile/polyvinylphenol, polyacrylonitrile/polyvinylpyrrolidone, polyacrylonitrile/polylactic acid, polyvinyl alcohol/vinyl acetate-vinyl alcohol copolymer, polyvinyl alcohol/polyethylene glycol, polyvinyl alcohol/polypropylene glycol, and polyvinyl alcohol/starch.

Methods for mixing the carbonizable resin with the eliminable resin are not limited, and various known mixing techniques can be employed so long as even mixing is possible therewith. Examples thereof include a rotary mixer having stirring blades and a kneading extruder with screws.

It is a preferred embodiment that the temperature (mixing temperature) at which the carbonizable resin and the eliminable resin are mixed together is not lower than a temperature at which both the carbonizable resin and the eliminable resin soften. As the temperature at which the resins soften, either the melting point of the carbonizable resin or eliminable resin in the case where the resin is a crystalline polymer or the glass transition temperature thereof in the case where the resin is an amorphous resin may be suitably selected. By setting the mixing temperature at a temperature not lower than the temperature at which both the carbonizable resin and the eliminable resin soften, the viscosity of the two resins can be lowered and, hence, more efficient stirring and mixing are possible. There is no particular upper limit on the mixing temperature, and the temperature is preferably 400°C or lower from the standpoint of preventing resin deterioration due to thermal degradation, thereby obtaining a precursor for the carbon material, which has excellent quality.

In the step 1, 10 to 90% by weight of the carbonizable resin is mixed with 90 to 10% by weight of the eliminable resin. In the case where the proportions of the carbonizable resin and eliminable resin are within those ranges, an optimal pore size and an optimal porosity can be arbitrarily designed. Those proportion ranges are hence preferred. When the proportion of the carbonizable resin is 10% by weight or larger, it is possible to retain mechanical strength in the carbonized material, and to improve yield, so that the proportions are preferred. Meanwhile, when the proportion of the carbonizable resin is 90% by weight or less, the eliminable resin can efficiently form voids, so that the proportions are preferred.

A mixing ratio between the carbonizable resin and the eliminable resin can be arbitrarily selected within the range while taking account of the compatibility of each material. Specifically, since compatibility between resins generally becomes worse as the ratio therebetween approaches 1:1, preferred embodiments in the case where a system having not so high compatibility has been selected as starting materials include one in which the compatibility is improved by making the mixture approach to the so-called partial composition by increasing or reducing the amount of the carbonizable resin.

It is also a preferred embodiment that a solvent is added when the carbonizable resin and the eliminable resin are mixed with each other. The addition of a solvent not only lowers the viscosity of the carbonizable resin and eliminable resin to facilitate molding but also makes the carbonizable resin and the eliminable resin easy to bring into a compatibly mixed state. The solvent referred to herein is not also particularly limited, and any solvent which is liquid at ordinary temperature and in which at least one of the carbonizable resin and the eliminable resin is soluble or swellable may be used. It is a more preferred embodiment that a solvent in which both the carbonizable resin and the eliminable resin dissolve is used because the compatibility between both resins can be improved.

It is preferable that the amount of the solvent to be added is 20% by weight or larger based on the total weight of the carbonizable resin and the eliminable resin, from the standpoints of improving the compatibility between the carbonizable resin and the eliminable resin and lowering the viscosity thereof to improve the flowability. Meanwhile, from the standpoint of the cost of the recovery and recycling of the solvent, the amount of the solvent to be added is preferably 90% by weight or less based on the total weight of the carbonizable resin and the eliminable resin.

[Step 2]

The step 2 is a step in which the resin mixture that has been brought into a compatibly mixed state in the step 1 is caused to undergo phase separation to form a microstructure and this microstructure is fixed. When a co-continuous phase separation structure is formed as the microstructure, a continuous porous structure can be formed by removing the eliminable resin to be described later.

Methods by which the carbonizable resin and eliminable resin that have been mixed together are caused to undergo phase separation are not particularly limited. Examples thereof include: a heat-induction phase separation method in which phase separation is induced by a temperature change; a nonsolvent-induction phase separation method in which phase separation is induced by adding a nonsolvent; a reaction-induction phase separation method in which phase separation is induced using a chemical reaction; and a method in which phase separation is caused by change of light, pressure, shearing, electric field and magnetic field. Of these, a heat-induction phase separation method and a nonsolvent-induction phase separation method are preferable because these methods easily control the conditions for inducing phase separation, thus making it comparatively easy to control the phase separation structure or size.

These phase separation methods can be used alone or in combination thereof. Specific examples of methods in the case of using a combination include: a method in which the mixture is passed through a coagulating bath to cause nonsolvent-induced phase separation and the mixture is then heated to cause heat-induced phase separation; a method in which nonsolvent-induced phase separation and heat-induced phase separation are simultaneously caused by controlling the temperature of a coagulating bath; and a method in which the material ejected from a spinning nozzle is cooled to cause heat-induced phase separation and is then brought into contact with a nonsolvent.

It is also a preferred embodiment that the above-mentioned phase separation is accompanied with no chemical reaction. The expression "accompanied with no chemical reaction" herein means that either of the carbonizable resin and eliminable resin which have been mixed undergoes no change in primary structure before and after the mixing. The term "primary structure" means the chemical structure which constitutes the carbonizable resin or the eliminable resin. In the case where the phase separation is accompanied with no chemical reaction, the mechanical and chemical properties of the carbonizable resin and/or eliminable resin are not impaired and, hence, a structure body of any shape such as a fiber or film shape can be molded without considerably changing the molding conditions. This embodiment is hence preferred. Especially in the case where a microstructure has been formed through phase separation without causing a crosslinking reaction or the like and the microstructure has been fixed, considerable increase in elastic modulus due to crosslinking reaction is not observed and a flexible structure can be maintained during molding. Because of this, excellent passability through steps for fiber or film production can be obtained without being led to thread breakage or film rupture.

[Removal of Eliminable Resin]

It is preferable that the resin mixture in which a microstructure resulting from the phase separation has been fixed in the step 2, is subjected to removal of the eliminable resin at any stage during the carbonization step (step 3) or before the carbonization step (step 3). Methods for the removal of the eliminable resin are not particularly limited, and any method may be used so long as the eliminable resin can be decomposed and removed thereby. Specifically, suitable methods include: a method in which the eliminable resin is chemically decomposed and lowered in molecular weight using an acid, alkali, or enzyme and is removed thereby; a method in which the eliminable resin is dissolved away with the addition of a solvent capable of dissolving the eliminable resin; and a method in which the eliminable resin is depolymerized using radiation, such as electron beams, gamma rays, ultraviolet rays, or infrared rays, to thereby remove the eliminable resin.

Especially, in the case where the eliminable resin can be thermally decomposed, a heat treatment may be conducted beforehand at such a temperature that at least 80% by weight of the eliminable resin disappears, or the eliminable resin may be gasified by thermal decomposition and then removed simultaneously with heat treatment in the carbonization step (step 3) or in the treatment for imparting infusibility which will be described later. It is a more suitable embodiment that the method is selected in which the eliminable resin is gasified by thermal decomposition and then removed simultaneously with heat treatment in the carbonization step (step 3) or in the treatment for imparting infusibility which will be described later, from the standpoint of reducing the number of steps to heighten the productivity. In particular, the eliminable resin is removed simultaneously with carbonization in the carbonization step (step 3). Such removal is a preferred embodiment because not only a cost reduction due to the reduction in the number of steps but also an improvement in yield are expected.

[Treatment for Imparting Infusibility]

It is preferable that the resin mixture in which a microstructure resulting from the phase separation has been fixed in the step 2, or the resultant obtained by which the resin mixture is further subjected to the above-mentioned removal of the eliminable resin as required is subjected to a treatment for imparting infusibility before being subjected to the carbonization step (step 3). Methods for the treatment for imparting infusibility are not particularly limited, and known methods can be used. Specific examples of the methods include: a method in which the resin mixture is heated in the presence of oxygen to thereby cause oxidative crosslinking; a method in which the resin mixture is irradiated with high-energy rays such as electron beams or gamma rays to form a crosslinked structure; and a method in which a substance having a reactive group is immersed or mixed to form a crosslinked structure. Of these, the method in which the resin mixture is heated in the presence of oxygen to thereby cause oxidative crosslinking is preferred because the process is simple and the production cost can be reduced. These techniques can be used alone or in combination thereof, and the techniques may be used either simultaneously or separately.

The heating temperature in the method in which the resin mixture is heated in the presence of oxygen to thereby cause oxidative crosslinking is preferably a temperature of 150°C or higher from the standpoint of causing the crosslinking reaction to proceed efficiently, but is preferably a temperature of 350°C or lower from the standpoint of preventing the yield from being impaired by a weight loss due to the thermal decomposition, combustion, etc. of the carbonizable resin.

There are no particular limitations on oxygen concentration during the treatment. However, a preferred embodiment is one in which a gas having an oxygen concentration of 18% or higher is supplied, in particular, air is supplied as it is, because use of such a gas makes it possible to reduce the production cost. Methods for supplying the gas are not particularly limited, and examples thereof include a method in which air is supplied as it is to the heating device and a method in which pure oxygen is supplied to the heating device using a bomb or the like.

Examples of the method in which the resin mixture is irradiated with high-energy rays such as electron beams or gamma rays to form a crosslinked structure include a method in which a commercially available electron beam generator or gamma ray generator is used to irradiate the carbonizable resin with electron beams or gamma rays to thereby induce crosslinking. A lower limit of the irradiation intensity is preferably 1 kGy or higher from the standpoint of efficiently introducing a crosslinked structure by the irradiation, and the irradiation intensity is preferably 1,000 kGy or less from the standpoint of preventing the material strength from being reduced by a decrease in molecular weight due to cleavage of the main chain.

At this time, a crosslinked compound having a double bond between carbons in the structure is preferably used together. Any known crosslinked compounds can be also used. Examples of the crosslinked compound include ethylene, propene, isoprene, butadiene, styrene, $\alpha$-methylstyrene, divinylbenzene, acrylic acids, methacrylic acids, monoallyl isocyanurate, diallyl isocyanurate, and triallyl isocyanurate. When a crosslinked compound having two or more double bonds between carbons in its molecule, it can cause the crosslinking reaction to proceed efficiently. This compound is hence preferred.

Examples of the method in which a substance having a reactive group is immersed or mixed to form a crosslinked structure include: a method in which a low-molecular-weight compound having a reactive group is immersed into the resin mixture, followed by heating or irradiating with high-energy rays to cause a crosslinking reaction to proceed; and a method in which a low-molecular-weight compound having a reactive group is mixed beforehand, followed by heating or irradiating with high-energy rays to cause a crosslinking reaction to proceed.

A suitable method is to conduct a decomposition treatment simultaneously with the treatment for imparting infusibility, because the benefit of a cost reduction due to the reduction in the number of steps can be expected.

The resin mixture itself in which a microstructure resulting from the phase separation has been fixed in the step 2, or the precursor material which has been further subjected to the above-mentioned decomposition treatment and/or the treatment for imparting infusibility as required, the precursor material being in a state transformable into a carbon material by pyrolysis, is hereinafter referred to as a carbon material precursor.

[Step 3]

The step 3 is a step in which the carbon material precursor is pyrolyzed and carbonized to obtain a porous carbon material (hereinafter simply referred to as "carbon material") before being composited with metal particles.

It is preferable that the pyrolysis is conducted by heating the carbon material precursor in an inert gas atmosphere to 600°C or higher in order to sufficiently carbonize the precursor. The term "inert gas" herein means a gas which is chemically inert during the heating. Specific examples thereof include helium, neon, nitrogen, argon, krypton, xenon, and carbon dioxide. It is a preferred embodiment from the standpoint of economical efficiency that nitrogen or argon is used among these. Especially, in the case where the carbonization temperature is set to 1,500°C or higher, it is preferred to use argon from the standpoint of inhibiting the formation of nitrides.

The carbonization temperature of 600°C or higher is preferable because the carbonization can sufficiently proceed. In addition, the carbonization temperature of 800°C or higher is preferable because the above-mentioned carbon crystal grains are efficiently formed on the branches which constitute the continuous porous structure. The lower the carbonization temperature is, the smaller the carbon crystal grain size becomes, while the higher the carbonization temperature is, the larger the carbon crystal grain size becomes. It is, therefore, preferable to suitably select the carbonization temperature in accordance with the target carbon crystal grain size.

The flow rate of the inert gas is not limited so long as the oxygen concentration within the heating device can be sufficiently lowered, and it is preferred to suitably select an optimal value in accordance with the size of the heating device, amount of the feed material to be supplied, heating temperature, etc. There is no particular upper limit on the flow rate, and it is preferable that it is suitably set in accordance with a temperature distribution or the design of the heating device, from the standpoints of economical efficiency and of reducing temperature differences within the heating device. Furthermore, in the case where the gases which generate during the carbonization can be sufficiently discharged from the system, a carbon material having excellent quality can be obtained. This embodiment is hence more preferred. It is, therefore, preferred to determine the flow rate of the inert gas so that the concentration of the generated gases in the system is 3,000 ppm or less.

There is no upper limit on the temperature at which the precursor is heated, and temperatures not higher than 3,000°C are preferred from the standpoint of economical efficiency because the carbonization can be caused to proceed sufficiently at such temperatures and because the equipment requires no special processing.

With respect to heating methods in the case where the carbonization treatment is continuously performed, a method in which the material is continuously fed to and taken out from the heating device kept at a constant temperature, using rollers, conveyor, or the like is preferred because the productivity can be heightened.

Meanwhile, in the case where a batch treatment is conducted in a heating device, there is no particular lower limit on the heating rate and cooling rate. However, rates of 1°C/min or higher are preferred because the time period required for the heating and cooling can be shortened to thereby heighten the productivity. Further, there is no particular upper limit on the heating rate and cooling rate, and it is preferred to employ as the upper limit on the heating rate and cooling rate a rate which is lower than the thermal shock resistance of the material that constitutes the heating device.

The time period for maintaining the precursor at the carbonization temperature can be set arbitrarily. The longer the time period for maintaining at the carbonization temperature, the larger the carbon crystal grains can grow, while the shorter the time period for maintaining at the carbonization temperature, the smaller the carbon crystal grains can be. It is, therefore, preferable to suitably set the time in accordance with the target applications. Five minutes or longer time period for maintaining at the carbonization temperature is preferable because carbon crystal grains can efficiently grow. Further, 1200 minutes at the longest of such time period is preferable because energy consumption can be suppressed and the carbon material can be obtained efficiently.

The carbon material in the form of a powder can be produced when the carbon material precursor is subjected to pulverization treatment and the resulting material is then subjected to the above-mentioned step 3, or when the carbon material obtained through the step 3 is further subjected to pulverization treatment. A conventionally known method can be selected for the pulverization treatment and it is preferable to suitably select the method in accordance with the particle size to be attained through the pulverization treatment and the treatment amount. Examples of the method for the pulverization treatment include a ball mill, bead mill, and jet mill. Although the pulverization treatment may be continuous or batchwise, a continuous treatment is preferred from the standpoint of production efficiency. The filling material to be filled into the ball mill is suitably selected. It is preferable that a material based on a metal oxide, such as alumina, zirconia, or titania, or a material obtained by coating stainless steel, iron, or the like as cores with a nylon, polyolefin, fluorinated polyolefin, or the like is used for applications where inclusion of a metallic material is undesirable. For other applications, use of a metal such as stainless steel, nickel, or iron can be suitably used.

It is also a preferred embodiment from the standpoint of heightening the efficiency of pulverization that a pulverization aid is used during the pulverization. The pulverization aid is selected arbitrarily from among water, alcohols, glycols, ketones, etc. Ethanol and methanol are preferred alcohols from the standpoints of ease of availability and cost. In the case of using a glycol, ethylene glycol, diethylene glycol, propylene glycol, or the like is preferable. In the case of using a ketone, acetone, ethyl methyl ketone, diethyl ketone, or the like is preferable. It is preferable that the pulverization aid is removed by washing or drying after the pulverization.

The carbon material which has undergone the pulverization treatment is classified to give a material which is even in particle size. The carbon material which is even in particle size is preferable because, for example, when the carbon material is composited with the metal fine particles in the step 4, the support treatment can be efficiently performed in a gas or liquid phase. With respect to particle size, it is preferred to suitably select the size in accordance with applications of the pulverized carbon material.

[Activation Treatment]

An activation treatment is a step of obtaining a porous carbon material by activating the carbonized material obtained in the step 3 or the carbonized material composited with the metal fine particles obtained in the step 4. The activation method is not particularly limited and a gas activation method, a chemical activation method or the like may be used. The gas activation method is a method in which pores are formed by using oxygen, water vapor, carbon dioxide gas, air or the like as an activator, heating a carbonized material at a temperature of 400 to 1500°C, preferably 500 to 900°C for several minutes to several hours. Further, the chemical activation method is a method in which using one or more kinds selected from zinc chloride, iron(III) chloride, calcium phosphate, calcium hydroxide, potassium hydroxide, magnesium carbonate, sodium carbonate, potassium carbonate, sulfuric acid, sodium sulfate, potassium sulfate and the like, heat treatment is performed for several minutes to several hours. If desired, the heated product is washed with water, hydrochloric acid or the like, the pH thereof is then adjusted and the obtained product is dried.

In general, there are tendencies that the BET specific surface area increases and the pore diameter is enlarged due to further progression of activation and increase of the activator mixing amount. The mixing amount of the activator is preferably 0.5 parts by weight or more, more preferably 1.0 part by weight or more, and even more preferably 4 parts by weight or more, relative to 1 part by weight of the target carbon material. The upper limit thereof is not particularly limited and the amount is generally 10 parts by weight or less. The chemical activation method tends to make the pore diameter enlarge more than the gas activation method.

In the present invention, a chemical activation method is preferably adopted because the method enables the pore diameter to be enlarged and the BET specific surface area to increase. Especially, a chemical activation method with an alkaline chemical such as calcium hydroxide, potassium hydroxide and potassium carbonate is preferably adopted.

In the case of activation with an alkaline chemical, the amount of the acid functional group tends to increase, which may not be preferable depending on the applications. At this time, the carbon material is subjected to heat treatment under a reducing atmosphere with nitrogen, argon or hydrogen, thereby allowing to reduce the amount thereof.

[Step 4]

The step 4 is a step in which metal fine particles are supported on the carbon material obtained in the step 3 to obtain a metal composite carbon material.

The method of supporting the metal fine particles in the carbon material is not particularly limited, and examples thereof include a method of immersing a liquid slurry of metal fine particles to dry; a method of immersing precursors of metal fine particles as a solution and then drying the immersed precursors; and a method of permeating an aerosol of metal fine particles through the carbon material.

In the case of the method of immersing a liquid slurry of metal fine particles and drying the immersed slurry to produce a metal composite carbon material, the size of the metal fine particle is adjusted so as to be an average diameter 0.8 times or less the structural period of the continuous porous structure. This adjustment enables the metal fine particles to be efficiently supported in the continuous porous structure, which is preferable. The concentration of the metal fine particles in the liquid slurry is not particularly limited, and the lower concentration allows uniform support of the metal fine particles without inhibiting diffusion and permeation of the metal fine particles. In addition, the higher concentration allows large amounts of metal fine particles to be supported.

For the purpose of improving dispersibility of the metal fine particles, a dispersant, a viscosity modifier or the like may be contained in the liquid slurry of the metal fine particles . The dispersant may have an effect of preventing the metal fine particles from carrying electrical charge. Further, it is also preferable that the viscosity modifier is added to prevent the metal fine particles from having a flocculated structure and to maintain the metal fine particles in high dispersion. The viscosity modifier is not particularly limited, and the one dissolved in the liquid is preferably used depending on the liquid type. In the case where the liquid is water, polyalkylene glycol, polyvinyl alcohol, polyvinylpyrrolidone, carboxymethylcellulose, starch or the like may be used. Further, alcohol, ether or the like is also preferably used so as to adjust the interfacial tension. The amount of the viscosity modifier, alcohol or ether added is not particularly limited. When the amount thereof is within 50% by weight, however, it is preferable that the viscosity or the interfacial tension can be sufficiently adjusted, enabling the metal fine particles to be kept in a highly dispersed state.

As the method of immersing the precursors of the metal fine particles in the solution and drying the immersed precursors to produce a metal composite carbon material, an aqueous solution of a metal salt is preferably used as the precursors of the metal fine particles. The term "metal salt" herein means a compound containing a metal in at least a portion thereof, such as hydroxide, halide and the like. When the metal salt is used in an aqueous solution, the pH may be any of acidic, neutral and basic. The metal salt solution has low viscosity, and rapidly causes diffusion and permeation into the continuous porous structure, so that the metal salt can be supported with high efficiency. When the carbon material is immersed in the metal salt solution, it is preferable that the pH is adjusted while both the carbon material and the metal salt are heated and stirred. The metal salt solution having adjusted pH easily precipitates the metal fine particles on the surface of the carbon material, and can enhance the support efficiency. The pH value is not particularly limited as long as the metal fine particles are precipitated on the surface of the carbon material. For example, when the metal salt solution is acidic or basic, the solution is preferably adjusted by adding a base or an acid to neutralize. Here, the concentration of the precursor of the metal fine particles is not particularly limited, and the concentration in the range of 0.01 to 10% by weight can sufficiently exhibit the support effect and can maintain the surface area of the carbon material.

Further, it is preferable that the composite carbon material, immersed in the solution and dried, subsequently undergoes a reduction step. The reduction method is not particularly limited, and a method of reducing in a liquid phase and a method of reducing in a gas phase are conveniently operated and achieve efficiently reduced at low cost, which is preferable. In the case of reducing in a liquid phase, the step is preferable in which a reducing agent is mixed in the dried metal composite carbon material to reduce the mixture and the reduced mixture is then washed using pure water, followed by drying.

EXAMPLES

Preferred examples of the present invention will be described below, but the following description should not limit the present invention at all.

Evaluation Methods

[Continuous Porous Structure]

A specimen was pulverized, the pulverized specimen was placed on a specimen stage for an electron microscope and was then observed. At this time, when a structure in which pores and branches were respectively continued inward and intertwined was observed in the observation specimen, it was judged to have a continuous porous structure.

[Structural Period of Continuous Porous Structure]

A specimen was sandwiched between specimen plates, and the position of a CuK$\alpha$ line source and the positions of the specimen and a two-dimensional detector were regulated so that information on scattering angles less than 10 degrees was obtained from the X-ray source obtained from the CuK$\alpha$ line source. From the image data (luminance information) obtained from the two-dimensional detector, the data on the central portion which had been affected by a beam stopper were excluded. Radius vectors from the beam center were set, and the values of luminance for the range of 360° at angular intervals of 1° were summed up to obtain a scattered-light-intensity distribution curve. From the scattering angle $2\theta$ corresponding to the position of a peak in the curve obtained, the structural period of the continuous porous structure was obtained using the following equation.

[Mathematical Formula 2]

$$L = \frac{\lambda}{2\sin\theta}$$

Structural period: L, λ: wavelength of incident X-rays

[X-ray Diffraction Peak]

A specimen was set on a specimen plate, then, a powder method was conducted using an X-ray diffractometer RINT2500, manufactured by Rigaku Cooperation to thereby obtain an X-ray diffraction profile.

[Presence/Absence of Carbon Crystal Grain and Carbon Crystal Grain Size, Existence Proportion of Carbon Crystal Grain]

Among specimens, an ultrathin fragment of a portion having a continuous porous structure was prepared for observation with a transmission electron microscope using a convergence ion beam, and this fragment was observed with the transmission electron microscope. In the case where black contrast portions were present in the branches of the continuous porous structure illustrated in FIG. 2, it was judged that the portion having the continuous porous structure had carbon crystal grains. Further, ten portions of the obtained black contrast portions were taken randomly, and the area of the black contrast portion was determined based on the pixel size of the image of the photographed transmission electron microscope photograph. The area thereof was converted to a diameter of a circle equivalent to the area. The average value of the ten portions thus taken was calculated and the resulting value was determined as the carbon crystal grain size. A proportion in which the area of the obtained black contrast portion accounts for the whole area used for the analysis, was determined as an existence proportion of the carbon crystal grain.

[Existence Proportion of Carbon Atom]

With respect to ten black contrast portions selected randomly among the ultrathin fragments in which the sizes of the above-mentioned carbon crystal grains were measured, the existence proportion of the carbon atom per weight was determined by energy dispersive X-ray spectrometry, and the average of the existence proportions thereof in the ten portions was determined as the existence proportion of the carbon atom.

[Average Porosity]

A specimen was embedded in a resin, and a cross-section of the specimen was thereafter exposed with a razor blade or the like. Using SM-09010, manufactured by JEOL Ltd., the specimen surface was irradiated with argon ion beams at an accelerating voltage of 5.5 kV to etch the surface. A central part of the resultant cross-section of the composite carbon material was examined with a scanning secondary-electron microscope at a magnification regulated so as to result in $1\pm0.1$ (nm/pixel) and at a resolution of 700, 000 pixels or higher, and a square examination region for calculation in which each side had 512 pixels was set in the resulting image. The average porosity refers to the resultant which was calculated using the following equation, in which A was the area of the examination region and B was the area of the pores.

$$\text{Average porosity (\%)} = \text{B/A} \times 100$$

[Acquisition of Pore Diameter Distribution Curve]

A specimen was vacuum-dried under the conditions of 300°C and 5 hours to thereby remove gas components which had been adsorbed. Thereafter, a pore diameter distribution curve was acquired using AutoPore IV9500, manufactured by SHIMADZU CORPORATION.

[Average Diameter of Metal Fine Particles]

The metal composite carbon material was observed with a transmission electron microscope, 10 metal fine particles that were independently observed were extracted from the obtained image, each of the particle diameters was determined, and the average value thereof was obtained. The value thus obtained was an average diameter of the metal fine particles.

[Elemental Composition of Metal Fine Particles]

As for a portion in which the metal fine particles having the above-mentioned diameter determined are present, the elemental composition of the metal fine particle portions was analyzed according to energy resolution X-ray analysis.

[Example 1]

Into a separable flask were introduced 70g of polyacrylonitrile (Mw, 150, 000) manufactured by Polysciences, Inc., as a carbonizable resin, 70g of polyvinylpyrrolidone (Mw, 40, 000) manufactured by Sigma Aldrich, as an eliminable resin, and 400g of dimethyl sulfoxide (DMSO) manufactured by WAKENYAKU CO. LTD., as a solvent. The contents were heated at 150°C for 3 hours with stirring and refluxing, thereby preparing a resin mixture of an even and transparent solution. In this solution, the concentration of the polyacrylonitrile and the concentration of the polyvinylpyrrolidone were 13% by weight each.

The resin mixture obtained was cooled to 25°C and then ejected at a rate of 3 mL/min from a one-orifice nozzle having an orifice diameter of 0.6 mm, and the extrudate was led into a pure-water coagulating bath kept at 25°C, subsequently taken off at a rate of 6 m/min, and accumulated in a vat to thereby obtain raw fibers with a microstructure. In this operation, the air gap was set at 5 mm, and the length of immersion in the coagulating bath was 15 cm. The raw fibers obtained were translucent and had undergone phase separation (formed a microstructure).

The raw fibers obtained were dried for 1 hour in a circulating dryer kept at 25°C, thereby removing the water present on the fiber surface. Thereafter, vacuum drying was conducted at 25°C for 5 hours to obtain dried raw fibers as a precursor material.

The raw fibers as a precursor material were thereafter introduced into an electric furnace kept at 240°C and heated in an oxygen atmosphere for 1 hour, thereby performing a treatment for imparting infusibility. The raw fibers which had undergone the treatment for imparting infusibility had changed to black in color.

The obtained raw fibers which had undergone the treatment for imparting infusibility were subjected to a carbonization treatment under the conditions of a nitrogen flow rate of 1 L/min, heating rate of 10°C/min, maximum temperature of 1,500°C, and holding time of 10 minute, thereby obtaining carbon fibers (carbon materials).

A core layer having a continuous porous structure was formed in a central part of the carbon fibers obtained, and the structural period thereof was 88 nm, and the average porosity thereof was 55%. This carbon material gave a pore diameter distribution curve which had pore diameter distribution peak at 50 nm, and analysis of the cross-section thereof revealed that the fiber diameter was 160 $\mu$m and the skin layer, which was formed around the core layer and was the portion having no continuous porous structure, had a thickness of 5 $\mu$m. Furthermore, an even continuous porous structure was formed in the fiber center part.

When the X-ray diffraction profile of the carbon material was measured, a peak having a peak top of 25.5° was observed. A fragment having a thickness of 80 nm was cut out from the portion which constituted a continuous porous structure using a convergence ion beam, and the structure thereof was examined using a transmission electron microscope. As a result, pores which constituted a continuous porous structure, shown by white contrasts, branches which constituted a continuous porous structure, shown by gray contrasts, and carbon crystal grains shown by black contrasts in a part of the gray contrast branches were observed as shown in FIG. 2. The carbon crystal grain size was 30 nm, and the existence proportion of the carbon crystal grain was 1.0%. In addition, the existence proportion of the carbon atom was 91% when measured.

The obtained carbon fibers having a continuous porous structure were roughly pulverized with a mortar. Thereafter, 10 g of the pulverized fibers were introduced into a ball mill having a diameter of 90 mm, and 10 balls each having a diameter of 10 mm were also introduced together. Then, the carbon fibers were pulverized at 100 rpm for 12 hours to obtain carbon powders. A continuous porous structure was observed in the carbon powders obtained (Fig. 1), and the structural period of the continuous porous structure was 86 nm, and the average porosity thereof was 55%.

Into an aqueous solution in which 150 mg of chloroplatinic acid and 20 ml of pure water were previously mixed was added 100 mg of the resulting carbon powder having the continuous porous structure, and the added mixture was then sufficiently stirred to obtain a dispersion. The obtained dispersion was stirred in a water bath kept at 70°C, the pH was determined once every 10 minutes. An operation of suitably adding 1M-NaOH so that the pH was 7 or higher was conducted for a total 60 minutes from start of heating. Thereafter, the added mixture was filtered, washed using 100 ml of pure water and then air-dried to obtain a metal composite carbon material precursor. Into an alumina crucible was introduced 50 mg of the precursor, and had undergone a reduction process at 250°C for 4 hours in a reducing atmosphere with 95% of nitrogen and 5% of hydrogen kept at a flow rate of 0.1 L/min, so that the metal fine particles were supported in the carbon powders. Therefore, a metal composite carbon material was obtained.

The obtained metal composite carbon material having platinum fine particles supported therein was confirmed as black particles (Fig. 2). The average diameter of the black particle was 3 nm. Further, the elemental composition of the black particle was measured to be 80% platinum which was a transition metal.

A continuous porous structure in the obtained metal composite carbon material was observed, and the size and existence proportion of the carbon crystal grains were the same values as those obtained before being composited with the metal.

Further, when the same measurement technique was used after the metal fine particles were removed from the metal composite carbon material, a continuous porous structure was observed, and the structural period, average porosity, porous diameter distribution curve and X-ray diffraction profile were the same values as those obtained before being composited with the metal.

[Example 2]

Potassium hydroxide in an amount 4 times as much as the carbonized material was mixed with the carbon powder in Example 1, the mixture was then introduced into a rotary kiln, and the temperature was increased to 820°C under a flow of nitrogen. The mixture was subjected to an activation treatment for 1 hour and 45 minutes, and the temperature was thereafter decreased. Using water and dilute hydrochloric acid, the resulting mixture was washed until the pH became about 7. The carbon powder obtained after the treatment had an average porosity in the co-continuous structural portion of 63% and a structural period of 76 nm. Further, the carbon powder had a structure which contained a portion having no co-continuous structure in a portion of the particles. The BET specific surface area was 2590 $m^2/g$, the average diameter of the pore by the MP method was 0.8 nm, and the pore volume was 2.2 $cm^2/g$.

Thereafter, using the carbon powders obtained, the metal fine particles were supported in the carbon powders in the same manner as in Example 1, to thereby obtain a metal composite carbon material.

The obtained metal composite carbon material having platinum fine particles supported therein was confirmed as black particles. The average diameter of the black particle was 3 nm. Further, the elemental composition of the black particle was determined to be 80% platinum which was a transition metal.

A continuous porous structure in the obtained metal composite carbon material was observed, and the size and existence proportion of the carbon crystal grains were the same values as those obtained before being composited with the metal.

Further, when the same measurement technique was used after the metal fine particles were removed from the metal composite carbon material, a continuous porous structure was observed, and the structural period, average porosity, porous diameter distribution curve and X-ray diffraction profile were the same values as those obtained before being composited with the metal.

**Claims**

1. A metal composite carbon material having metal fine particles supported in a continuous porous structure in which a carbon skeleton and voids form respective continuous structures, the continuous porous structure having a structural period, measured as described in the specification, of 20 nm or larger and 10 $\mu$m or smaller, and the metal composite carbon material having small pores on the surface thereof having an average diameter, measured as described in the specification, of 0.4 nm to 10 nm, wherein the average diameter of the metal fine particles, measured as described in the specification, is 8pm or less, and the metal fine particles contain a transition metal element which is one or more selected from the group consisting of ruthenium, rhodium, palladium, osmium, iridium and platinum.

2. The metal composite carbon material according to claim 1, wherein small pores on the surface thereof have an average diameter of not less than 0.5 nm.

3. The metal composite carbon material according to claim 1 or 2, wherein the continuous porous structure has at least one peak diameter in the range of 5 nm to 400 nm in a pore diameter distribution curve, measured as described in the specification.

4. The metal composite carbon material according to any one of claims 1 to 3, wherein the continuous porous structure has an average porosity, measured as described in the specification, of 10 to 80%.

**5.** A fuel cell catalyst comprising a metal composite carbon material according to any one of claims 1 to 4.

**6.** A fuel cell comprising a fuel cell catalyst according to claim 5.

**7.** A hydrogen-occluding material comprising a metal composite carbon material according to any one of claims 1 to 4.

**8.** A hydrogen tank comprising a hydrogen-occluding material according to claim 7.

**9.** A production method for a metal composite carbon material as claimed in claim 1, the method comprising the following steps in this order:

Step 1: a step of bringing 10 to 90% by weight of a carbonizable resin and 90 to 10% by weight of an eliminable resin into a compatibly mixed state to obtain a resin mixture;
Step 2: a step of causing the resin mixture to undergo phase separation to form a microstructure and fixing the microstructure;
Step 3: a step of obtaining a carbon material by carbonization; and
Step 4: a step of supporting metal fine particles on the carbon material; and

wherein the microstructure fixed in step 2 is subjected to removal of the eliminable resin at any stage during or before the carbonization of step 3.

**Patentansprüche**

**1.** Metallkohlenstoffverbundwerkstoff mit Metallfeinteilchen, die in einer durchgängigen porösen Struktur gestützt sind, in der ein Kohlenstoffgerüst und Hohlräume entsprechende durchgängige Strukturen ausbilden, wobei die durchgängige poröse Struktur laut der in der Beschreibung beschriebenen Messung eine Strukturperiode von 20 nm oder mehr und 10 $\mu$m oder weniger aufweist und der Metallkohlenstoffverbundwerkstoff laut der in der Beschreibung beschriebenen Messung auf seiner Oberfläche kleine Poren mit einem mittleren Durchmesser von 0,4 nm bis 10 nm aufweist, wobei der mittlere Durchmesser der Metallfeinteilchen laut der in der Beschreibung beschriebenen Messung 8 $\mu$m oder weniger beträgt, und die Metallfeinteilchen ein Übergangsmetallelement enthalten, das eines oder mehrere aus der aus Ruthenium, Rhodium, Palladium, Osmium, Iridium und Platin bestehenden Gruppe ausgewählte(s) darstellt.

**2.** Metallkohlenstoffverbundwerkstoff nach Anspruch 1, wobei kleine Poren auf dessen Oberfläche einen mittleren Durchmesser von zumindest 0,5 nm aufweisen.

**3.** Metallkohlenstoffverbundwerkstoff nach Anspruch 1 oder 2, wobei die durchgängige poröse Struktur laut der in der Beschreibung beschriebenen Messung zumindest einen Peak-Durchmesser im Bereich von 5 nm bis 400 nm in einer Porendurchmesserverteilungskurve aufweist.

**4.** Metallkohlenstoffverbundwerkstoff nach einem der Ansprüche 1 bis 3, wobei die durchgängige poröse Struktur laut der in der Beschreibung beschriebenen Messung eine mittlere Porosität von 10 bis 80 % aufweist.

**5.** Brennstoffzellenkatalysator, der einen Metallkohlenstoffverbundwerkstoff nach einem der Ansprüche 1 bis 4 umfasst.

**6.** Brennstoffzelle, die einen Brennstoffzellenkatalysator nach Anspruch 5 umfasst.

**7.** Wasserstoffeinschlussmaterial, das einen Metallkohlenstoffverbundwerkstoff nach einem der Ansprüche 1 bis 4 umfasst.

**8.** Wasserstofftank, der ein Wasserstoffeinschlussmaterial nach Anspruch 7 umfasst.

**9.** Herstellungsverfahren für einen Metallkohlenstoffverbundwerkstoff nach Anspruch 1, wobei das Verfahren die folgenden Schritte in der angegebenen Reihenfolge umfasst:

Schritt 1: einen Schritt, bei dem 10 bis 90 Gew.-% eines carbonisierbaren Harzes und 90 bis 10 Gew.-% eines entfernbaren Harzes in einen kompatiblen vermischten Zustand gebracht werden, um ein Harzgemisch zu erhalten;

Schritt 2: einen Schritt des Bewirkens, dass das Harzgemisch einer Phasentrennung unterzogen wird, um eine Mikrostruktur auszubilden, und des Fixierens der Mikrostruktur;

Schritt 3: einen Schritt des Erhaltens eines Kohlenstoffmaterials durch Carbonisierung; und

Schritt 4: einen Schritt des Stützens der Metallfeinteilchen auf dem Kohlenstoffmaterial; und

wobei die in Schritt 2 fixierte Mikrostruktur zu einem beliebigen Zeitpunkt vor oder während der Carbonisierung von Schritt 3 einer Entfernung des entfernbaren Harzes unterzogen wird.

## Revendications

1.  Matériau composite carboné métallique comportant des particules métalliques fines supportées dans une structure poreuse continue dans laquelle un squelette carboné et des vides forment des structures continues respectives, la structure poreuse continue ayant une période structurale, mesurée comme décrit dans la spécification, de 20 nm ou plus et 10 $\mu$m ou moins, et le matériau composite carboné métallique comportant des petits pores sur la surface de celui-ci ayant un diamètre moyen, mesuré comme décrit dans la spécification, de 0,4 nm à 10 nm, dans lequel le diamètre moyen des particules métalliques fines, mesuré comme décrit dans la spécification, est de 8 $\mu$m ou moins, et les particules métalliques fines contiennent un élément métal de transition qui est l'un ou plusieurs choisis dans le groupe constitué de : ruthénium, rhodium, palladium, osmium, iridium et platine.

2.  Matériau composite carboné métallique selon la revendication 1, dans lequel les petits pores sur la surface de celui-ci ont un diamètre moyen de pas moins de 0,5 nm.

3.  Matériau composite carboné métallique selon la revendication 1 ou 2, dans lequel la structure poreuse continue a au moins un diamètre maximal dans la plage de 5 nm à 400 nm dans une courbe de distribution de diamètre de pore, mesurée comme décrit dans la spécification.

4.  Matériau composite carboné métallique selon l'une quelconque des revendications 1 à 3, dans lequel la structure poreuse continue a une porosité moyenne, mesurée comme décrit dans la spécification, de 10 à 80 %.

5.  Catalyseur de pile à combustible comprenant un matériau composite carboné métallique selon l'une quelconque des revendications 1 à 4.

6.  Pile à combustible comprenant un catalyseur de pile à combustible selon la revendication 5.

7.  Matériau d'occlusion d'hydrogène comprenant un matériau composite carboné métallique selon l'une quelconque des revendications 1 à 4.

8.  Réservoir d'hydrogène comprenant un matériau d'occlusion d'hydrogène selon la revendication 7.

9.  Procédé de production d'un matériau composite carboné métallique selon la revendication 1, le procédé comprenant les étapes suivantes dans cet ordre :

    Etape 1 : étape consistant à amener 10 à 90 % en poids d'une résine carbonisable et 90 à 10 % en poids d'une résine éliminable dans un état de mélange compatible pour obtenir un mélange de résines ;

    Etape 2 : étape consistant à amener le mélange de résines à subir une séparation de phases pour former une microstructure et fixer la microstructure ;

    Etape 3 : étape consistant à obtenir un matériau carboné par carbonisation ; et

    Étape 4: étape consistant à supporter des particules métalliques fines sur le matériau carboné ; et

    dans lequel la microstructure fixée dans l'étape 2 est soumise à l'élimination de la résine éliminable à un stade quelconque pendant ou avant la carbonisation de l'étape 3.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011001224 A
- JP 2010115636 A
- US 20120041121 A
- JP 2004071253 A
- EP 3171437 A

**Non-patent literature cited in the description**

- *J. Amer. Chem. Soc.,* 1951, vol. 73, 373
- *Jounal of Colloid and Interface Science,* 1968, vol. 26, 45